# EUROPEAN PATENT SPECIFICATION

(11) **EP 3 437 950 B1**
(45) Date of publication and mention of the grant of the patent: **09.09.2020**
(21) Application number: 18185238.5
(22) Date of filing: 24.07.2018
(51) Int. Cl.: B61B 7/00, B61B 12/02

(54) **MOBILE CABLEWAY SYSTEM**
MOBILES SEILBAHNSYSTEM
SYSTÈME DE CHEMIN DE CÂBLE MOBILE

(30) Priority: 04.08.2017 NL 2019395
(43) Date of publication of application: 06.02.2019
(73) Proprietor: Vermolen Amusement Nederland B.V., 5236 WB 's-Hertogenbosch (NL)
(72) Inventor: van den Oord, Henricus Johannes Maria, 5626 HS Eindhoven (NL); Vermolen, Cornelis Johannes, 5236 WB 's-Hertogenbosch (NL)
(74) Representative: DeltaPatents B.V.

(56) References cited:
- WO-A1-2006/130030
- WO-A1-2011/078460
- WO-A2-2009/143529
- CN-U- 202 413 791
- JP-A- 2014 231 295

## Description

### FIELD OF THE INVENTION

The present invention relates to a cableway system for transporting passengers over long distances, as well as a mast and an end station for use in the cableway system. The invention also relates to a method for transporting persons, wherein the persons are transported by means of the cableway system.

### BACKGROUND ART

Cableway systems are known as such. The well-known cableway systems are generally arranged in a mountainous area to transport passengers easy to transport through the mountainous area. The known cableway systems comprise a boarding and disembarking station between which a cable is stretched. For support of the cable a number of masts are arranged between the boarding and disembarking stations, wherein the masts comprise wheels for guiding the cable. Document WO 2006/130030 A1 discloses a rope railway system for transporting passengers over long distances, comprising:
- at least one mast, the at least one mast being arranged on a ground,
- at least one end station wherein the at least one end station can be set up on the ground,
- an endless cable, in which the cable forms a transport path between the at least one mast and the at least one end station,
- a number of passenger compartments, the passenger compartments being connectable with the cable at a distance from each other and being arranged for holding passengers; and
- driving means for driving the cable about the transport path.

The boarding and disembarking stations and the masts are firmly anchored to a concrete foundation provided in the ground.

A disadvantage of the known cableway system is that it requires a considerable installation time for, among other things, the underground work for the foundations. Furthermore, such a cable railway system is fixedly positioned after the installation and is therefore not mobile.

### SUMMARY OF THE INVENTION

It is an object of the present invention to provide a mobile cableway system which is displaceable and relatively fast to set up and can be disassembled again.

The object of the present invention is reached by a cabling system for transporting passengers over long distances, comprising:
- at least one mast, the at least one mast being erectable on the ground;
- at least one end station, wherein the at least one end station can be set up on the ground;
- an endless cable, in which the cable forms a transporting path, between the at least one mast and the at least one end station;
- a number passenger compartments, the passenger compartments being connectable with the cable at a distance from each other, and being arranged for holding passengers; and
- drive means for driving the cable about the transport path,
   wherein, at least during use, neither the mast nor the end station is anchored with a foundation in the ground.

The inventor has realized that a foundation for anchoring into the subsoil is not necessarily required in case of a cableway. Due to the absence of a foundation, a quick and efficient dissembling of the cableway system is possible. As a result, a mobile cableway system is provided, which can thus be set up efficiently and which can then be efficiently disassembled for transport.

Within the context of this document, a "long distance" that the at least one mast is free of the at least one end station, wherein the at least one mast and the at least one end station are only connected by means of the cable. Preferably, a distance between the at least one mast and the at least one terminal is about 20 - 100 meters. More in particular, the distance approximately 30 - 60 meters.

Within the context of this document is meant with an "end station"; a station where passenger compartments, which are connected with at the end of the endless cable, in use, to pass there through, whereby passengers can step in and/or out of the passenger compartment. It is also conceivable that at the "end station" no one can enter or exit and that the station is only intended to change the transport direction of the passengers. In the description below the word boarding station is used, as being an example of an end station.

Within the context from this document is becoming meant with a "passenger's compartment "; a lift or gondola, whether or not closed, for keeping passengers. This lift or gondola includes, for example, one or more seats. However, it is also possible that the elevator has a space in which passengers can stand.

Within the context of this document is meant by "drive means"; means known to the person skilled in the art for driving a cable of a cableway along a cable railway path.

Advantageous embodiments according to the present invention are described below.

In one embodiment the at least one mast and/or the at least one boarding station comprises at least one leg and a foot attached to the leg, the foot comprising a contact surface which during use, rests on the ground.

By attaching a foot to a leg, a support is provided for the mast or the boarding station, the foot providing an increased contact with the ground relative to the situation with only one leg. Due to the enlarged surface, the load-bearing forces are distributed over a larger surface area, there will be no, or virtually no, damage to the substrate, and the leg will not sink.

The foot can be a plate-shaped element, such as a stamp plate, which may optionally be fixedly and/or hingedly coupled to the leg. But the foot may also have other shapes, such as a punch with a conical shape or a pyramid-shape with the lower side of the punch serving as a contact surface (that is to say support surface) for contact with the ground. The contact surface can be flat, but can also be slightly curved, depending on the application and the ground surface.

In one embodiment the foot comprises engaging means arranged on the contact surface, for increased the traction with the ground. An increased traction is particularly advantageous at the legs and feet of the boarding station. At this boarding station, relatively large transverse forces are exerted by the cable during use. Increasing the traction will prevent an undesirable shift of the boarding station.

The engaging means may comprise profile elements which have been manufactured from metal and/or rubber. A metal profile is advantageous if the feet are placed on a soft surface, such as on a lawn. A rubber profile is advantageous if the feet are placed on a hard surface, such as on a concrete surface or a stone surface.

In an embodiment according to the present invention, the mast comprises at least three mast legs, wherein a position of the at least three mast legs relative to each other and to the mast is adjustable for vertical positioning of the mast.

Due to the adjustability of the mast legs, it is possible to place them on the ground in such a way that the mast stands stably and vertically.

In an embodiment according to the present invention the at least one mast comprises mast stabilizing means for stabilizing the at least one mast, which mast stabilizers are arranged above the ground at a base of the mast. The mast stabilizing means may comprise one or more solid blocks, such as concrete blocks, or blocks manufactured of a relatively heavy material, such as allow all or lead, or a combination thereof. In another embodiment, the mast stabilizing means comprise one or more containers, which, when filled, can serve as counterweights. The containers can be filled with a medium after installation. Such counterweights ensure an improved stability of the mast. An example is a container with water or sand. The water or sand can be removed if the mast has to be transported to another location after use.

In an embodiment according to the present invention, the at least one boarding station comprises station stabilization means for stabilizing the at least one boarding station.

The station stabilization means may comprise one or more containers which can be filled with a medium. This makes it possible to enter the boarding if set up the bottom line, to weigh up. The medium is, for example, water, or sand, or metals, or a multitude of stones. Preferably, the container is empty during transport from the boarding station and the container is filled with the medium when the boarding station is arranged on the underground. This can save energy for transport. Instead of containers, the stabilizing means can also comprise solid blocks such as concrete blocks or blocks of another relatively heavy material.

In an embodiment according to the present invention, the boarding station is transportable by means of a trailer or a truck. With a trailer is meant; a vehicle comprising at least one chassis with at least one wheel axle, a number wheels connected to the at least one wheel axle, and coupling means for it coupling the chassis to a truck. Here the vehicle is suitable for passing through the lorry to be transported on a road. Such a trailer and truck are known to the person skilled in the art.

With the aid of the trailer it is possible to easily transport the boarding station over the road, such as over a highway. This makes it possible to easily move the cableway system to a desired location so as to setup the cableway system on location.

In one embodiment according to the present invention, the at least one boarding station comprises a chassis with wheels, the boarding station with chassis is transportable by means of a truck. The chassis comprises coupling means known to the person skilled in the art for coupling such a chassis on the truck, so that the lorry can pull the boarding station. The wheels are suitable for supporting the chassis with the boarding station over a road, such as a motorway.

By providing the boarding station with a chassis with wheels, it is easy to transport the boarding station to a desired location, whereby relatively few operations are required for preparing the transport.

In an embodiment according to the present invention, the at least one boarding station is provided with a boarding platform, wherein a part of the boarding board is pivotable about a pivot axis, wherein the pivotable part of the boarding platform is drivable by means of a drive, wherein a circumferential speed of the rotatable part of the boarding platform, when in use, is lower than or equal to a speed of the cable.

A distance between the passenger compartments and the boarding platform is such that passengers can step in or out of the passenger compartments.

Due to the rotatable part of the boarding platform, a passenger who presorts on the rotatable part of the boarding platform will move with the rotatable part of the boarding platform, thus making the passenger move is during the boarding process. This provides a relatively efficient way of getting in or out. In addition, the inventor has realized that the boarding station with a rotatable boarding platform can be relatively compact, in contrast to a boarding board that follows a straight track.

In an embodiment according to the present invention, each passenger compartment comprises a rod with an axis, the rod being suitable for connection to the cable and for the passenger compartment with the cable, holding the passenger compartment, the rod comprising turning means for rotating the passenger compartment around the axis of the rod. The turning of the passenger compartment is preferably initiated by an operator at the boarding station.

With the turning mechanism is the possible to rotate the passenger compartment above the boarding platform, when boarding and/or disembarking, between 0 and 180 degrees with respect to a direction of movement of the passenger compartment so that a passenger can enter/exit, wherein the direction of movement of the passenger compartment is not blocked by the passenger.

In an embodiment according to the present invention, the cableway system comprises a plurality of masts, wherein the masts of the plurality of masts can be set up one behind the other and at a distance from each other on a ground surface. In particular, the masts are positioned at a distance of 20 - 150 meters from each other. More specifically, the distance between the masts is 30 - 60 meter.

With the plurality of masts it is possible to arrange a cable rail system in which, for example, bends have been formed and/or in which passengers have to be transported over a further distance.

In an embodiment according to the present invention, the cableway path has a length of 40 - 500 meters. However, it is possible to arrange more or fewer masts on a ground, and to adjust the length of the cable, so that the length of the cable route can be varied. The present invention further provides a method for transporting persons, wherein the persons are transported by means of a cableway system according to the invention.

### BRIEF DESCRIPTION OF THE DRAWINGS

The above described features and advantages of the present invention can best be understood from the following description in the light of the figures. In the figures, identical reference numbers refer to like parts or parts with the same or equivalent function.
Figure 1 presents a schematic side view of an embodiment of a cableway system according to the present invention.
Figure 2a presents a schematic side view of a mast of a cableway system according to an embodiment of the present invention.
Figure 2b presents a schematic top view of a mast of the cableway system according to an embodiment of the present invention.
Figure 3a presents a schematic side view of a mast of a cableway system according to an embodiment of the present invention.
Figure 3b presents a schematic top view of a mast of a cableway system according to an embodiment of the present invention.
Figure 3c presents a schematic side view of the base of the mast of Figure 3a.
Figure 3d shows a perspective view of the cross beams of Figure 3c.
Figure 4 presents a schematic top view of a boarding station according to an embodiment of the present invention.
Figure 5 presents a schematic side view of a boarding station according to an embodiment of the present invention in a transport mode, and an operational mode.
Figure 6 presents a schematic side view of a boarding station according to an embodiment of the present invention in a transport mode, and an operational mode.
Figure 7 presents a schematic side view of a boarding station according to an embodiment of the present invention in a transport mode, and an operational mode.
Figure 8 presents a schematic side view of a boarding station according to an embodiment of the present invention in a transport mode, and an operational mode.
Figure 9 presents a schematic side view of the cableway system according to an embodiment of the present invention, comprising a second boarding station.
Figure 10 presents a number of different embodiments of the mast.
Figure 11 shows a part of a further embodiment of the boarding station.
Figures 12a and 12b show a number of examples of the profile elements.

It should be noted that items which have the same reference numbers in different figures, have the same structural characteristics and the same functions. If the function and/or structure you have already been explained of such an item, then there is no need for a repeated explanation in the detailed description.

### DETAILED DESCRIPTION OF EMBODIMENTS

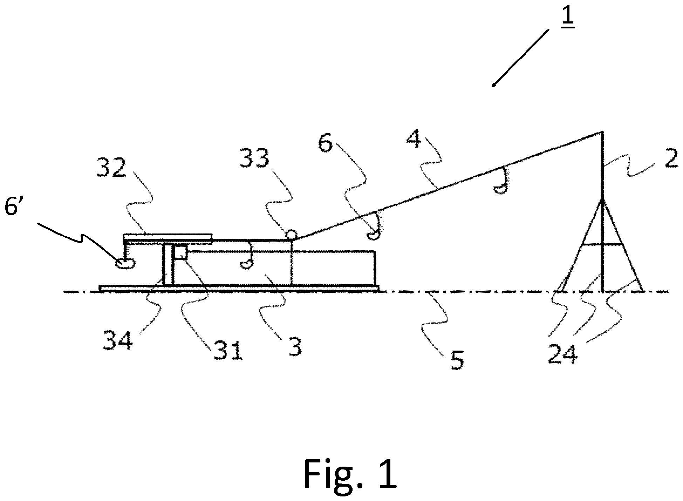

Figure 1 presents a schematic side view of a cableway system 1 according to an embodiment of the present invention.

The cableway system 1 in Figure 1 comprises a boarding station 3, a mast 2, a cable 4 which is stretched between the boarding station 3 and the mast 2, and a number of passenger compartments 6, 6'. The mast 2 and the boarding station 3 are arranged on a ground 5, wherein neither the mast 2 nor the boarding station 3 is anchored with a foundation in the ground 5.

The boarding station 3 comprises a wheel support 34, one rotatable wheel 32 mounted on the wheel support 34, and drive means 31. The wheel 32 is arranged for guiding the cable 4. The drive means 31 are arranged to drive the wheel 32.

The boarding station 3 further comprises a cable guide 33. The cable guide 33 ensures that forces on the cable 4 are correctly transferred to the wheel 32.

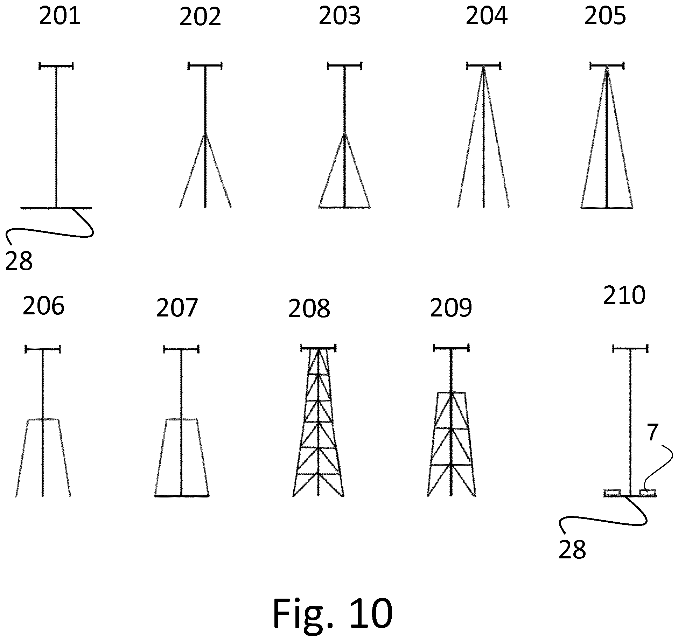

The mast 2 comprises three mast legs 24. In Figure 1 the mast 2 is arranged on a flat surface. The mast legs 24 are arranged at an equal angle with respect to the longitudinal axis of the mast 2. It is also possible that the mast 2 has more than three mast feet 24, like four or five. It is also possible that the mast has fewer than three legs, such as only one leg. An example is shown in Figure 10, see mast 201 and mast 210, where one leg extends up to the top of the mast.

The cable 4 forms a closed transport path between the boarding station 3 and the mast 2. That is to say, the transporting path forms a loop from the boarding station 3 to the mast 2 and from the mast 2 back to the boarding station 3. As can be seen in Figure 1, the mast grabs the cable 4 at a larger distance from the ground 5 as compared to the wheel 32 of the boarding station 3.

In Figure 1 a single mast 2 is arranged. However, it is also possible that there is a plurality of masts 2 each mast arranged after another, wherein the transport path is formed by the endless cable 4 supported by each mast 2 of the plurality of masts 2.

On the cable 4 a number of passenger compartments 6, 6' are positioned. The passenger compartments 6, 6' are connected to the cable 4, each at an equal distance, so that loads on the cable 4 over the length from the cable 4 proportional can be divided. It is however also possible that the passenger compartments 6, 6' are connected with the cable 4 on an irregular distance from each other. Because the cable 4 at the boarding station 3 is lower to the ground 5, passengers can enter and exit the passenger compartment 6' at the level of the boarding station 3.

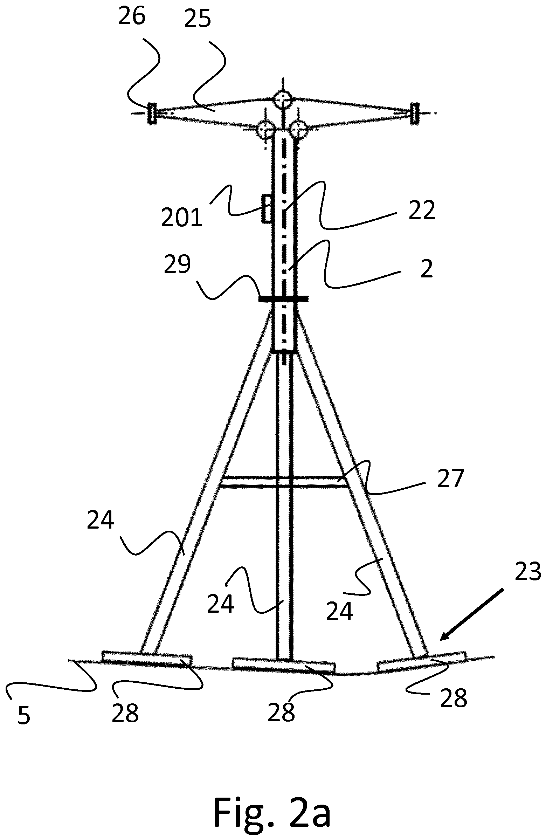

Figure 2a presents a schematic side view of a mast 2 of a cableway system 1 according to an embodiment of the present invention. The mast 2 includes a support arm 25 and a number of legs 24.

The support arm 25 extends radially from the longitudinal axis 22 of the mast 2. The support arm 25 has two ends which are located at a distance from the longitudinal axis 22. Wheels 26 are provided at the second ends for guiding a cable 4.

In this case the mast 2 is provided with three mast legs 24, to which at a lower side, feet 28 and aligning means 23 are provided.

In one embodiment the alignment tools comprise hydraulic or pneumatic mechanisms that can effectively vary the length of the mast legs 24. The feet 28 are preferably tiltable with respect to the mast legs 24 so that they can be set on a sloping ground 5, wherein the legs 24 are arranged stably.

Furthermore there are first fixing means 27 arranged to fix the mast legs 24 relative to each other. In addition, in this example, second fixing means 29 are provided which are arranged for fixing the mast legs 24 relative to the mast 2.

In this example, the mast 2 further comprises a measuring unit 201 for measuring a position of the mast 2 relative to the ground 5. Preferably, the measuring unit 201 comprises a transmitter for communicating measuring data detected by the measuring unit 201 to a computer. When the mast 2 becomes unbalanced or shifts, the measuring unit 201 registers a change in the position. This change is then communicated to a computer of an operator, so that an operator receives feedback on an attitude of the mast 2.

The measuring unit 201 can also be used by an operator during the arrangement of the mast 2. The mast 2 has to be arranged substantially vertically. The measuring unit 201 can provide information about this to the operator, which operator in turn uses any alignment means 23 to set the vertical position of the mast 2.

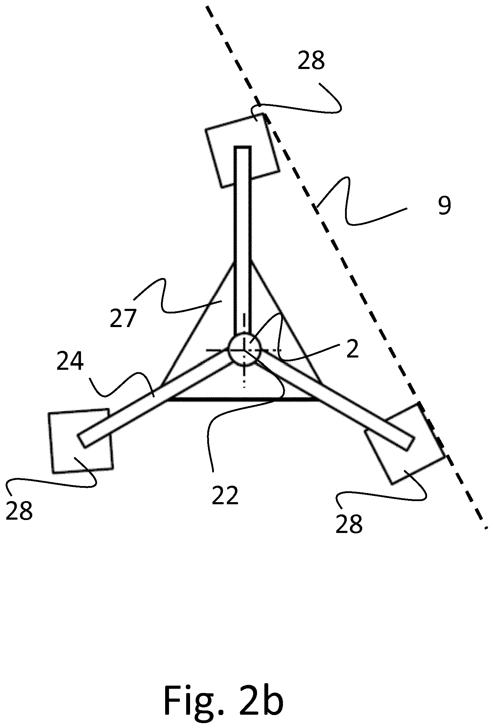

Figure 2b presents a schematic top view of a mast 2 of the cableway system 1 according to an embodiment of the present invention.

In Figure 2b it can be seen that the mast feet 24 and the feet 28 extend radially from the mast 2. The two feet 28 together form a tilting point along a tilting line 9. By increasing the distance between the longitudinal axis 22 and the mast feet 24, a distance between the longitudinal axis 22 and the feet 28 is increased, which makes tilting of the mast 2 more difficult.

In the example according to Figure 2b, the first fixing means 27 comprise a flat plate extending from the longitudinal axis 22 to the mast legs 24 of the mast 2, the plate being rigidly attached to the mast 2 and the mast legs 24. However, it is also possible that the first fixatives 27 comprise other types of connecting elements for fixing the mast legs 24, such as, for example, a number of beams arranged between the mast legs 24.

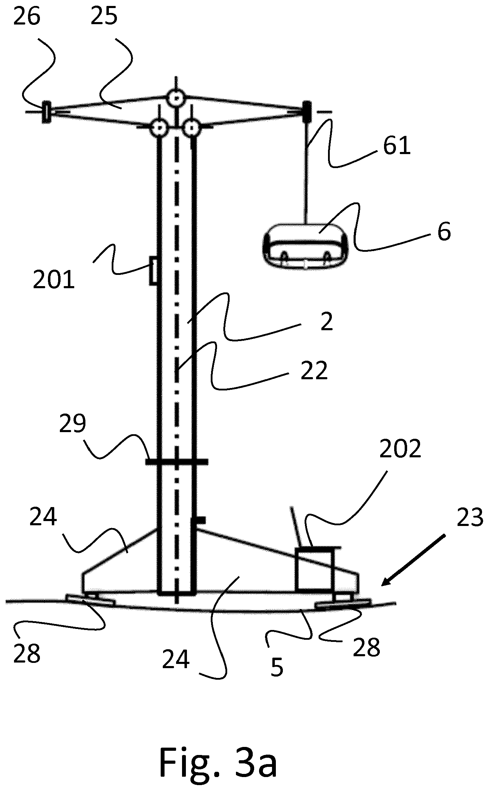

Figure 3a presents a schematic side view of a mast 2 of a cableway system 1 according to an embodiment of the present invention.

The mast 2 extends along the longitudinal axis 22 in a vertical direction. In this example the mast comprises a post 2' which can be placed in or on a tube 2". The mast legs 24 are coupled to the tube 2". During assembling, first the tube 2" is erected and the mast legs 24 are coupled. As soon as the tube 2" is placed vertically, the pile 2' can be assembled in, or on, the tube 2" by means of a tow truck.

Possibly, one or more benches are provided 202 are arranged on the mast feet 24. The benches 202 are arranged above a foot 28. The benches 202 have a social role and increase the harmony with the surroundings.

Figure 3a shows that a passenger compartment 6 is hanging on the cable 4. The passenger compartment 6 is connected to the cable 4 through a rigid rod 61.

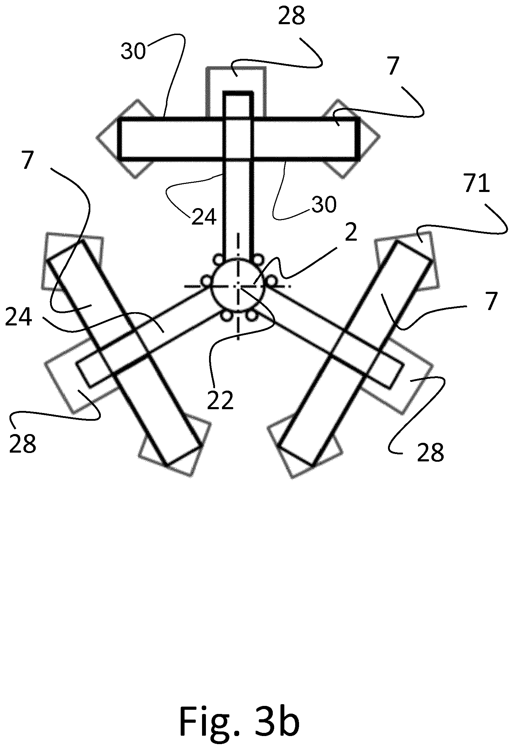

Figure 3b presents a diagrammatic top view of a mast system 2 of a cableway system 1 according to an embodiment of the present invention.

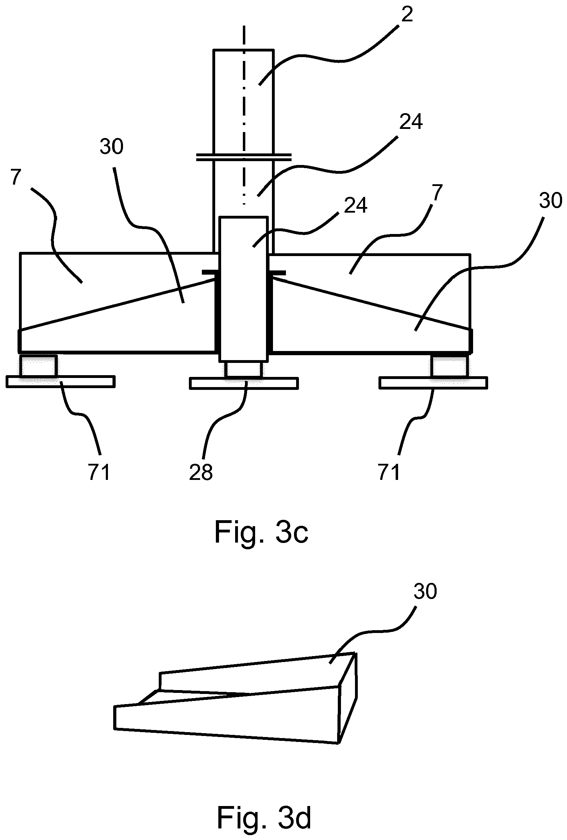

The mast 2 in Figure 3b is provided with a number of mast legs 24 with a foot 28 at each mast leg 24, wherein on each mast leg 24 two cross beams 30 are arranged in which counterweights 7 are placed. Examples of counterweights are concrete blocks 7. Figure 3c shows a side view of the base of the mast 2 in which can be seen that two concrete blocks are positioned in two cross beams 30.

Figure 3d shows a perspective view of the cross beams 30 of Figure 3c. It can be seen that each of the cross beams 30 offers space for placing a solid block, or a container to be filled with a medium.

In this way the counterweights 7 are placed at a most remote outer ends of each mast leg 24 located at one of the mast 2. The cross beams 30 are coupled to the side of a mast leg 24 and are supported at their outer ends by a foot 71 constructed as a plunger plate 71 which rests on the ground. These feet 71 can be identical to the feet 28 supporting the legs 24.

Due to the weighting of the mast legs with counterweights 7, the stability of the mast as a whole is increased. Therefore the counterweights 7 are also called stabilizing means.

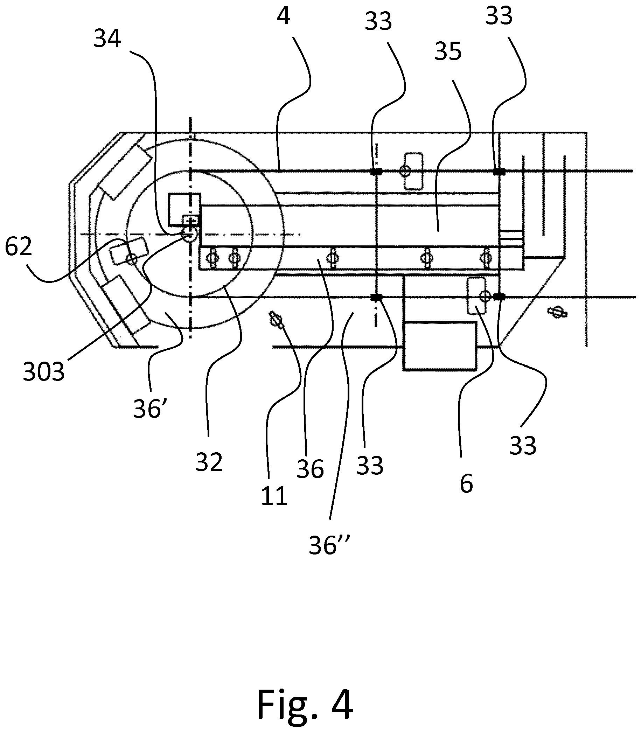

Figure 4 presents a schematic top view of a boarding station 3 according to an embodiment of the present invention. The boarding station 3 comprises a boarding platform 36, station stabilizing means 35, a wheel support 34, and a wheel 32, four cable guides 33, and a cable 4 with a number of passenger compartments 6 attached to the cable 4, wherein the cable 4 is held at a circumference of the wheel 32.

The boarding platform 36 is suitable for guiding a number of passengers 11. A part of the boarding platform 36' is rotatable about a pivot axis 303 of the wheel support 32. Passengers 11 can board on the rotatable portion of the boarding platform 36' in a passenger compartment 6. In the example of Figure 4 passengers 11 are allowed to step out of a passenger compartment 6 on an exit portion 36" of the boarding platform 36. In this example, passengers 11 can thus step out of the passenger compartment 6 before the passenger compartment 6 reaches the rotatable boarding platform 36'.

This example is favourable in combination with an example
where the passenger compartments 6 are rotatably mounted by means of a rotating mechanism to the cable 4, because passengers 11 can then enter and exit relatively comfortably, while the space on the boarding platform is used relatively efficiently is becoming.

In another example, it is possible that passengers 6 can get in and out on the rotatable part of the boarding platform 36'.

In one example, the rotatable part of the boarding platform 36' has a circumferential speed which can be different than the speed of the cable 4. For example, it is possible that the circumferential speed of the rotatable portion 36' is the same, higher or lower than the speed of the cable 4.

Optionally, the boarding platform 36 comprises a drivable treadmill for transporting passengers 11.

It is possible that the drivable treadmill of the boarding platform 36 is arranged for transporting passengers 11 to the rotatable part of the boarding platform 36'.

In this example, the station stabilization means 35 are embodied by an elongated body. Preferably, the station stabilizing means 35 comprise one or more containers, which can be filled with a medium. It is also possible that the elongated body is solid, or that it is constructed as a number part arranged next to each other, such as a number of concrete blocks. For example, the elongate body may comprise cement, and/or wood, and/or metal.

The wheel support 34 extends along a pivot axis 303 passing through the boarding platform 36. The wheel support 34 keeps the wheel 32 at a distance from the boarding platform 36.

The cable 4 is wrapped around the wheel 32, wherein the cable 4 follows a circumference of the wheel 32. The cable 4 extends from the wheel 32 in the direction of a mast (not visible) via four cable guides 33. The cable guides are arranged for guiding the cable such that the cable 4 arrives at an angle at the wheel 32 which is substantially perpendicular to the axis of rotation 303, and in that the cable 4 arrives at an equal distance from the boarding platform 36 as the wheel 32.

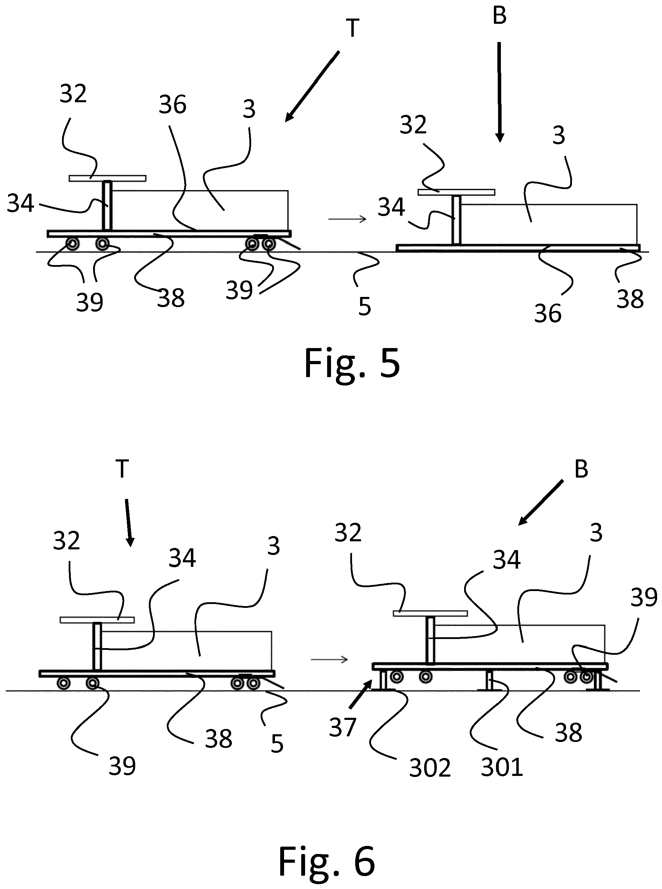

Figure 5 presents a schematic side view of a boarding station 3 according to an embodiment of the present invention. In Figure 5 the boarding station 3 is shown in a transport mode T and an operating mode B.

In this example, the boarding station 3 comprises a chassis 38 with detachable wheels 39.

The boarding station 3 can be transported in the transport mode T over a road and thus be brought to a desired location with a ground 5. At the desired location, the boarding station 3 is brought to the operating mode B by removing the wheels 39 from the chassis 38.

In the operating mode B, the chassis 38 forms the boarding platform 36.

Figure 6 presents a schematic side view of a boarding station 3 according to an embodiment of the present invention in a transport mode T and an operating mode B.

In this example, the boarding station 3 comprises a chassis 38 with wheels 39. Furthermore, the boarding station 3 has alignment means 37 which comprise a number of legs 301, in which at one outer end of the legs 301, a plate 302 is provided.

The chassis 38 is permanently attached to the boarding station 3.

Each of the legs 301 is individually adjustable in a distance relative to the boarding platform 36. This makes it possible to align the boarding platform 36 relative to the ground 5.

In the operating mode B, each of the plates 302, also called stamp plates, engages with the ground 5, wherein the surface with which a stamp plate engages with the ground 5 is greater than a width of the legs 301. Preferably the stamp plate 302 is rotatable, for example by means of a ball joint, around an outer end of each leg 301 which is farthest from the boarding platform 36. In an example each stamp plate 302 is detachable from each associated leg 301.

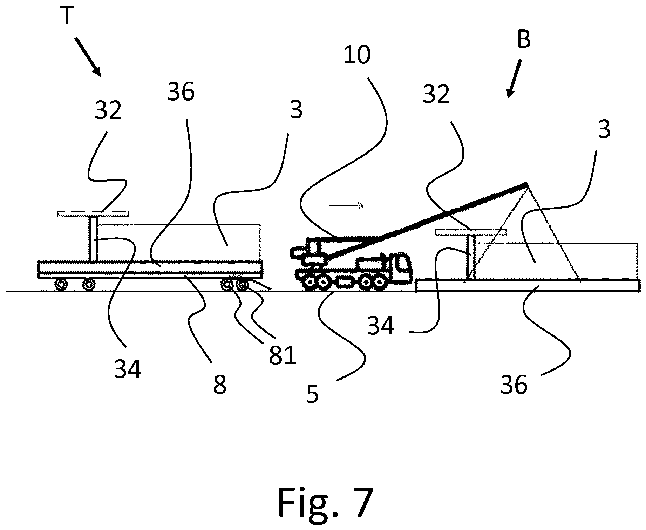

Figure 7 presents a schematic side view of the boarding station 3 according to an embodiment of the present invention, wherein the boarding station 3 in a transport mode T, is provided on a mobile trailer. In the operating mode B, the boarding station 3 is placed on a ground 5. The trailer is equipped with a chassis 8 with eight wheels 81.

It can be seen that the boarding station 3 is constructed in the transport mode T. A boarding platform 36 of the boarding station 3 is adjacent to the chassis 8, and is supported by the chassis 8 with the wheels 81.

To transfer the boarding station 3 from the transport mode T to the operating mode B, the boarding station 3 of the chassis 8 is lifted with the aid of a crane carriage 10 and brought to a location on the ground 5.

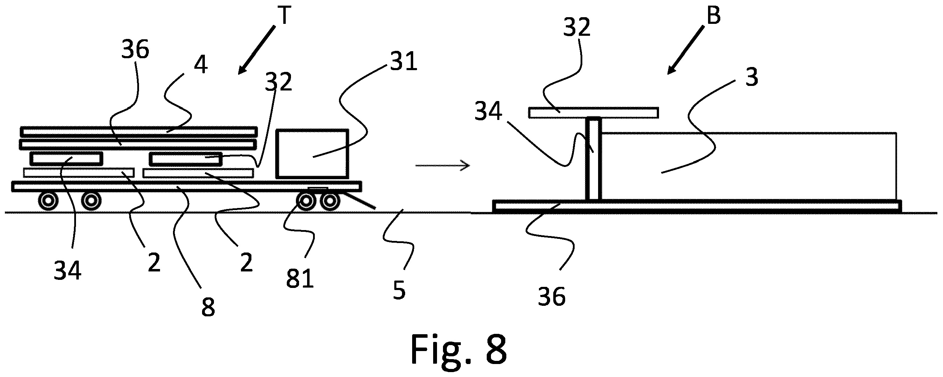

Figure 8 presents a schematic side view of a boarding station 3 according to an embodiment of the present invention. In Figure 8, the boarding station 3 is shown in a transport mode T and an operating mode B.

In the transport mode T, the boarding station 3 is provided on a chassis 8. The chassis 8 can be transported by means of wheels 81.

On the chassis 8, in the transport mode T, several parts of the boarding station 3 are provided, among which drive means 31, a wheel 32, a wheel support 34, and a boarding platform 36. In the example of Figure 8, a number of components of a cableway system according to the present invention are also arranged on the chassis 8, including a cable 4, and two masts 2.

To get to the operating mode B, the boarding station 3 is built up on the ground surface 5. To this end, the wheel support 34, the wheel 32, the boarding platform 36, and the drive means 31, which are located on the chassis in the transport state T, are used.

It is possible to use the chassis 8, 38 of the examples presented in the Figures 5, 6, 7, 8 next to the parts shown in these Figures, in order to transport a part of the cableway system or the complete cableway system according to the present invention to a desired location, after which the cableway system can be arranged on the ground 5. To this end, one trailer or several trailers can be provided.

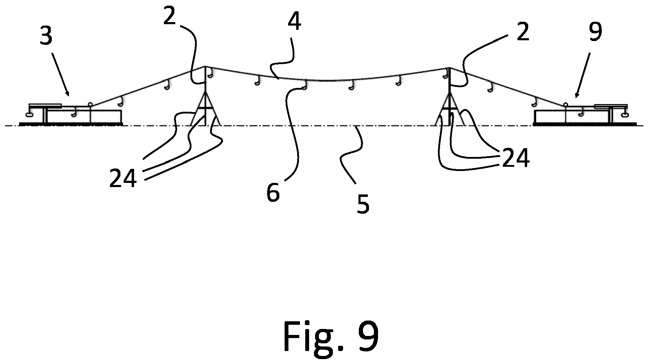

Figure 9 presents a schematic example of a cableway system 1 according to an embodiment of the present invention, wherein a second boarding station 9 is provided. The cableway system 1 comprises a first boarding station 3, a second boarding station 9, and an endless cable 4, which is stretched between the first boarding station 3 and the second boarding station 9. Between the first 3 and the second 9 boarding station two masts 2 are arranged for guiding the tensioned cable 4 between the first boarding station 3 and the second boarding station 9.

The second boarding station 9 is identical to the first boarding station 3.

The number of masts 2 arranged between the first boarding station 3 and the second boarding station 9 may vary depending on the length of the cableway path.

Figure 10 presents a schematic side view of a number of different embodiments of a mast which are arranged on the ground.

It can be seen that the mast 202, 203, 204, 205, 206, 207, 208 & 209 comprises three legs which can engage with the underground.

The mast 201 & 210 is provided with a single foot 28 for engaging with the ground. Preferably, the foot 28 is a flat plate or a substantially flat frame.

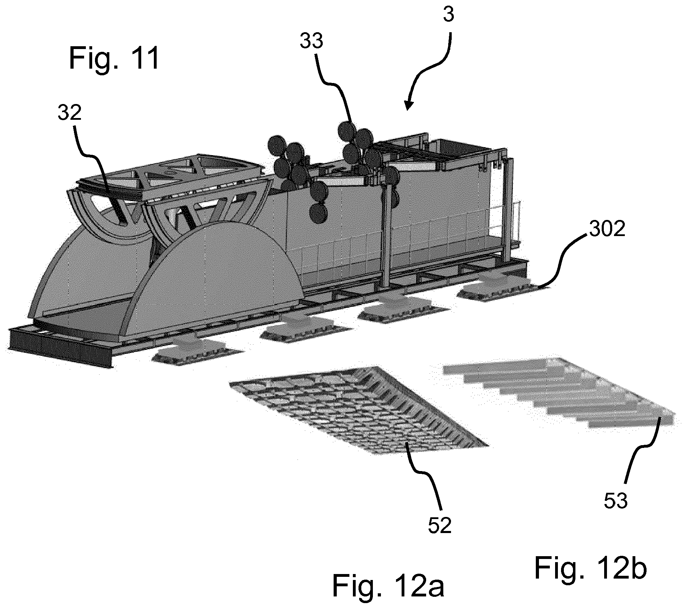

Figure 11 shows a part of a further embodiment of the boarding station 1. Figure 11 shows the boarding station in a mounting phase. The boarding station 3 is hoisted from a trailer, and the wheels have been removed from under the chassis and the chassis is on the ground. It can be seen that parts of the boarding station 3 are still collapsed, such as the boarding platform, the wheel 32 and the cable guide 33. After placing on the ground, the stamp plates 302 are arranged. In this case, on both sides of the boarding station 3, four stamp plates are arranged. In one embodiment, the stamp plates 302 are provided on their underside with engaging means in the form of, for example, a profile element. Figure 12a, 12b show a number of examples of the profile elements. Figure 12a shows a profile 52 of rubber, similar to caterpillar tracks. This profile is preferable if the station is placed on a hard surface, for example on a street made of stones.

Figure 12b shows a steel profile 53 with ridges. The profile of Figure 12b will be preferred if the surface is soft, such as a lawn.

All profiles shown engage with the ground surface and increase the traction with the ground. This increased traction is desirable to prevent the boarding station 3 from sliding during use. By using such stamp plates 302, with engagement means 52, 53 and by using station stabilizing means, such as the water-filled containers 3, a very stable boarding station is provided, that does not adversely affect the ground surface.

Variations of the examples shown can be devised and manufactured by a person skilled in the art of mobile cableway systems by studying the figures, description and claims of this document.

In the claims, the word "include" does not exclude the possibility that there are further elements besides the elements described in the claims. The word "means" can be a single element or multiple elements.

The reference numerals in the claims should not be interpreted so as to limit the scope of protection of the claims.

## Claims

1. Cableway system (1) for transporting passengers over long distances, comprising:
- at least one mast (2), the at least one mast (2) being erectable on the ground (5);
- at least one end station (3), wherein the at least one end station can be set up on the ground (5);
- an endless cable (4), in which the cable (4) forms a transport path between the at least one mast (2) and the at least one end station (3);
- a number of passenger compartments (6), the passenger compartments (6) being connectable with the cable (4) at a distance from each other, and being arranged for holding passengers; and
- drive means (31) for driving the cable (4) about the transport path, **characterised in that**, at least during use, neither the mast (2) nor the end station (3) is anchored with a foundation in the ground (5).

2. Cableway system (1) according to claim 1, **characterized in that** the at least one mast, and/or the at least one end station comprises at least one leg (24,301), and a foot (28,302) fixed to the leg, where the foot (28,302) comprise a contact surface which during use, rests on the ground.

3. Cableway system (1) according to claim 2, wherein the foot (28,302) comprises engaging means arranged on the contact surface, for increased traction with the ground (5).

4. Cableway system (1) according to claim 3, wherein the engaging means comprises profile elements made of metal and/or rubber.

5. Cableway system (1) according to any one of the preceding claims, **characterized in that** the mast (2) comprises at least three mast legs (24), wherein a position of the at least three mast legs (24) with respect to each other and to the mast (2), is adjustable for the vertical positioning of the mast (2).

6. Cableway system (1) according to any one of the preceding claims, **characterized in that** the at least one mast comprises mast stabilizing means for the stabilization of the at least one mast (2), said mast stabilizing means being arranged above the ground at a base of the mast.

7. Cableway system (1) according to claim 6, wherein the mast stabilizing means comprises one or more containers (7), which optionally can be filled with a medium, that serve as a counterweight.

8. Cableway system (1) according to any one of the preceding claims, **characterized in that** the at least one end station (3) comprises station stabilizing means (35) for the stabilization of the at least one end station (3).

9. Cableway system (1) according to claim 8, wherein the station stabilisation means comprises one or more, with a medium-fillable, containers (35).

10. Cableway system (1) according to any one of the preceding claims, **characterized in that** the at least one end station (3) is transportable by means of a trailer (8), or a truck.

11. Cableway system (1) according to any one of the preceding claims, **characterized in that** the at least one end station (3) comprises a chassis (38) with wheels (39), wherein the end station (3) with the chassis (38) is transportable with the aid of a truck.

12. Cableway system (1) according to any one of the preceding claims, **characterized in that** the at least one end station (3) has an boarding platform (36), wherein a part of the boarding platform (36') is pivotable about a pivot axis (303), wherein the pivotable part of the boarding platform (36') is drivable by means of a drive, wherein a circumferential speed of the rotatable part of the boarding platform (36'), when in use, is lower than or equal to a speed of the cable (4).

13. Cableway system (1) according to any one of the preceding claims, **characterized in that** each passenger compartment (6) comprises a rod (61) having an axis, wherein the rod (61) is adapted for connection to the cable (4) and for holding the passenger compartment (6) in the connected state of the passenger compartment (6) with the cable (4), wherein the rod (61) comprises turning means for pivoting the passenger compartment (6) around the axis of the rod (61).

14. Method for transporting persons, the method comprising:
- installing a cableway system according to any one of the claims 1-13;
- transporting persons by means of the cableway system.

## Patentansprüche

1. Ein Drahtseilbahnsystem (1) für das Transportieren von Fahrgästen über lange Entfernungen, das umfasst:
- mindestens einen Mast (2), wobei der mindestens eine Mast (2) auf dem Boden (5) aufstellbar ist;
- mindestens eine Endstation (3), wobei die mindestens eine Endstation auf dem Boden (5) eingerichtet werden kann;
- ein Endlosseil (4), wobei das Endlosseil (4) einen Transportweg zwischen dem mindestens einen Mast (2) und der mindestens einen Endstation (3) bildet;
- eine Anzahl von Fahrgastabteilen (6), wobei die Fahrgastabteile (6) mit dem Kabel (4) in einem Abstand voneinander verbindbar und eingerichtet sind, um Fahrgäste aufzunehmen; und
- Antriebsmittel (31) zum Antreiben des Kabels (4) um den Transportweg, **dadurch gekennzeichnet, dass** mindestens während der Verwendung weder der Mast (2) noch die Endstation (3) mit einem Fundament in dem Boden (5) verankert ist.

2. Das Drahtseilbahnsystem (1) nach Anspruch 1, **dadurch gekennzeichnet, dass** der mindestens einen Mast und/oder die mindestens eine Endstation mindestens ein Bein (24, 301) und einen Fuß (28, 302), der an dem Bein befestigt ist, umfasst, wobei der Fuß (28, 302) eine Kontaktoberfläche umfasst, die während der Verwendung auf dem Boden bleibt.

3. Das Drahtseilbahnsystem (1) nach Anspruch 2, wobei der Fuß (28, 302) ein Eingriffsmittel umfasst, das auf der Kontaktoberfläche für verbesserte Traktion mit dem Boden (5) eingerichtet sind.

4. Das Drahtseilbahnsystem (1) nach Anspruch 3, wobei das Eingriffsmittel Profilelemente, die aus Metall und/oder Kautschuk hergestellt sind, umfasst.

5. Das Drahtseilbahnsystem (1) nach einem der vorstehenden Ansprüche, **dadurch gekennzeichnet, dass** der Mast (2) mindestens drei Mastbeine (24) umfasst, wobei eine Position der mindestens drei Mastbeine (24) zueinander und zu dem Mast (2) für die Vertikalpositionierung des Masts (2) einstellbar ist.

6. Das Drahtseilbahnsystem (1) nach einem der vorstehenden Ansprüche, **dadurch gekennzeichnet, dass** das mindestens Mast ein Maststabilisierungsmittel für die Stabilisierung des mindestens einen Masts (2) umfasst, wobei das Maststabilisierungsmittel über dem Boden an einer Basis des Masts eingerichtet ist.

7. Das Drahtseilbahnsystem (1) nach Anspruch 6, wobei das Maststabilisierungsmittel einen oder mehrere Behälter (7), die optional mit einem Medium gefüllt werden können, die als ein Gegengewicht dienen, umfasst.

8. Das Drahtseilbahnsystem (1) nach einem der vorstehenden Ansprüche, **dadurch gekennzeichnet, dass** die mindestens eine Endstation (3) ein Stationsstabilisierungsmittel (35) für die Stabilisierung der mindestens einen Endstation (3) umfasst.

9. Das Drahtseilbahnsystem (1) nach Anspruch 8, wobei das Stationsstabilisierungsmittel einen oder mehrere Behälter (35) umfasst, die mit einem Medium füllbar sind.

10. Das Drahtseilbahnsystem (1) nach einem der vorstehenden Ansprüche, **dadurch gekennzeichnet, dass** die mindestens eine Endstation (3) mittels eines Sattelaufliegers (8) oder eines Lastkraftwagens transportierbar ist.

11. Das Drahtseilbahnsystem (1) nach einem der vorstehenden Ansprüche, **dadurch gekennzeichnet, dass** die mindestens eine Endstation (3) ein Chassis (38) mit Rädern (39) umfasst, wobei die Endstation (3) mit dem Chassis (38) mit Hilfe eines Lastkraftwagens transportierbar ist.

12. Das Drahtseilbahnsystem (1) nach einem der vorstehenden Ansprüche, **dadurch gekennzeichnet, dass** die mindestens eine Endstation (3) eine Einstiegplattform (36) aufweist, wobei ein Teil (36') der Einstiegplattform um eine Schwenkachse (303) schwenkbar ist, wobei der schwenkbare Teil (36') der Einstiegplattform mittels eines Antriebs fahrbar ist, wobei eine Umfangsgeschwindigkeit des drehbaren Teils (36') der Einstiegplattform bei der Verwendung kleiner oder gleich einer Geschwindigkeit des Kabels (4) ist.

13. Das Drahtseilbahnsystem (1) nach einem der vorstehenden Ansprüche, **dadurch gekennzeichnet, dass** jedes Fahrgastabteil (6) eine Stange (61) umfasst, die eine Achse aufweist, wobei die Stange (61) zur Verbindung mit dem Kabel (4) und zum Halten des Fahrgastabteils (6) in dem verbundenen Zustand des Fahrgastabteils (6) mit dem Kabel (4) angepasst ist, wobei die Stange (61) Wendemittel zum Schwenken des Fahrgastabteils (6) um die Achse der Stange (61) umfasst.

14. Ein Verfahren zum Transportieren von Personen, wobei das Verfahren Folgendes umfasst:
- Installieren eines Drahtseilbahnsystems nach einem der Ansprüche 1 bis 13;
- Transportieren von Personen mittels des Drahtseilbahnsystems.

## Revendications

1. Un système de téléphérique (1) pour transporter des passagers sur de longues distances, comprenant :
- au moins un pylône (2), l'au moins un pylône (2) pouvant être érigé sur le sol (5) ;
- au moins une gare d'arrivée (3), dans lequel l'au moins une gare d'arrivée peut être mise en place au sol (5) ;
- un câble sans fin (4), dans lequel le câble (4) forme une voie de transport entre l'au moins un pylône (2) et l'au moins une gare d'arrivée (3) ;
- un certain nombre de compartiments passagers (6), les compartiments passagers (6) pouvant être raccordés par le câble (4) à une certaine distance les uns des autres, et étant agencés pour accueillir des passagers ; et
- un moyen d'entraînement (31) pour entraîner le câble (4) sur la voie de transport, **caractérisé en ce que**, au moins pendant l'utilisation, ni le pylône (2) ni la gare d'arrivée (3) n'est ancré par des fondations dans le sol (5).

2. Un système de téléphérique (1) selon la revendication 1, **caractérisé en ce que** l'au moins un pylône, et/ou l'au moins une gare d'arrivée comprend au moins un pied (24, 301), et un socle (28, 302) fixé au pied, où le socle (28, 302) comprend une surface de contact qui pendant l'utilisation, repose sur le sol.

3. Un système de téléphérique (1) selon la revendication 2, dans lequel le socle (28, 302) comprend un moyen de mise en prise agencé sur la surface de contact, pour une meilleure traction avec le sol (5).

4. Un système de téléphérique (1) selon la revendication 3, dans lequel le moyen de mise en prise comprend des éléments profilés fabriqués en métal et/ou en caoutchouc.

5. Un système de téléphérique (1) selon l'une quelconque des revendications précédentes, **caractérisé en ce que** le pylône (2) comprend au moins trois pieds de pylône (24), dans lequel une position des au moins trois pieds de pylône (24) les uns par rapport aux autres et par rapport au pylône (2), peut être ajustée pour le positionnement vertical du pylône (2).

6. Un système de téléphérique (1) selon l'une quelconque des revendications précédentes, **caractérisé en ce que** l'au moins un pylône comprend un moyen de stabilisation de pylône pour la stabilisation de l'au moins un pylône (2), ledit moyen de stabilisation de pylône étant agencé au-dessus du sol à la base du pylône.

7. Un système de téléphérique (1) selon la revendication 6, dans lequel le moyen de stabilisation de pylône comprend un ou plusieurs conteneurs (7), qui peuvent éventuellement être remplis d'un milieu, qui sert de contrepoint.

8. Un système de téléphérique (1) selon l'une quelconque des revendications précédentes, **caractérisé en ce que** l'au moins une gare d'arrivée (3) comprend un moyen de stabilisation de gare (35) pour la stabilisation de l'au moins une gare d'arrivée (3).

9. Un système de téléphérique (1) selon la revendication 8, dans lequel le moyen de stabilisation de gare comprend un ou plusieurs conteneurs pouvant être remplis d'un milieu (35).

10. Un système de téléphérique (1) selon l'une quelconque des revendications précédentes, **caractérisé en ce que** l'au moins une gare d'arrivée (3) peut être transportée au moyen d'une remorque (8), ou d'un camion.

11. Un système de téléphérique (1) selon l'une quelconque des revendications précédentes, **caractérisé en ce que** l'au moins une gare d'arrivée (3) comprend un châssis (38) avec des roues (39), dans lequel la gare d'arrivée (3) avec le châssis (38) peut être transportée à l'aide d'un camion.

12. Un système de téléphérique (1) selon l'une quelconque des revendications précédentes, **caractérisé en ce que** l'au moins une gare d'arrivée (3) a une plate-forme d'embarquement (36), dans lequel une partie de la plate-forme d'embarquement (36') est apte à pivoter autour d'un axe de pivotement (303), dans lequel la partie apte à pivoter de la plate-forme d'embarquement (36') peut être entraînée au moyen d'un entraînement, dans lequel une vitesse circonférentielle de la partie rotative de la plate-forme d'embarquement (36'), lors de l'utilisation, est inférieure ou égale à la vitesse du câble (4).

13. Un système de téléphérique (1) selon l'une quelconque des revendications précédentes, **caractérisé en ce que** chaque compartiment passager (6) comprend une tige (61) ayant un axe, dans lequel la tige (61) est conçue pour un raccordement au câble (4) et pour maintenir le compartiment passager (6) dans l'état raccordé du compartiment passager (6) avec le câble (4), dans lequel la tige (61) comprend un moyen de rotation pour faire pivoter le compartiment passager (6) autour de l'axe de la tige (61).

14. Un procédé pour transporter des personnes, le procédé comprenant :
- l'installation d'un système de téléphérique selon l'une quelconque des revendications 1 à 13 ;
- le transport de personnes au moyen du système de téléphérique.
